# EUROPEAN PATENT APPLICATION

(11) **EP 2 418 790 A1**
(43) Date of publication of application: **15.02.2012**
(21) Application number: 10769222.0
(22) Date of filing: 14.01.2010
(51) Int. Cl.: H04B 15/02

(54) **COMMUNICATION DEVICE**

(30) Priority: 30.04.2009 CN 200920131161 U
(71) Applicant: Huawei Technologies Co., Ltd., Guangdong 518129 (CN)
(72) Inventor: LI, Zhe, Shenzhen Guangdong 518129 (CN); JIE, Weiping, Shenzhen Guangdong 518129 (CN); HAO, Junjie, Shenzhen Guangdong 518129 (CN)
(74) Representative: Thun, Clemens
(86) International application number: PCT/CN2010/070181
(87) International publication number: WO 2010/124533

(57) **Abstract**

A communication device is provided. The communication device includes a circuit for reducing low-frequency interference, and the circuit for reducing low-frequency interference includes a low-frequency filter circuit and a capacitor. The low-frequency filter circuit includes a terminal (1) and a terminal (2), in which the terminal (1) is connected to a power supply (23), and the terminal (2) is connected to a load (22); the capacitor includes a terminal (3) and a terminal (4), in which the terminal (3) is connected to the load (22), and the terminal (4) is connected to the power (23). By using the circuit for reducing low-frequency interference in a communication device, an input current of the communication device may be maintained stable, as a result, low-frequency interference of the communication device to other communication devices is reduced.

## Description

### CROSS-REFERENCE TO RELATED APPLICATION

The application claims the benefit of priority to Chinese Patent Application No. 200920131161.9, filed on April 30, 2009, and entitled "COMMUNICATION DEVICE", which is incorporated herein by reference in its entirety.

### FIELD OF THE TECHNOLOGY

The present invention relates to the field of communications, and more particularly to a communication device.

### BACKGROUND OF THE INVENTION

When a fan operates, its input current changes, and the frequency of the current varies from 200 Hz to 3 KHz. If a fan is used in a communication device, the input current of the communication device also changes, and the changing current may produce a changing low-frequency voltage, which may be added to a direct current (DC) power supply, thus affecting other devices. The changing low-frequency voltage is low-frequency interference.

Communications industry standards, such as European standards EISI EN300 132-2 and North America industry standard GR1089V4, have specific requirements regarding low-frequency interference emissions of a communication device. The low-frequency interference emission is a kind of conducted emission, and is conducted to the outside through a power interface of a communication device. The low-frequency interference is essentially the changing low-frequency currents.

A limit of a low-frequency interference emission require a frequency band from 25 Hz to 20 KHz, which is audible to humans. Therefore, the main purpose of restricting the low-frequency interference emission is to avoid audio noises.

In a communication device, the components that may produce low-frequency interference mainly include the fan, hard disk array, and low-frequency clock circuit.

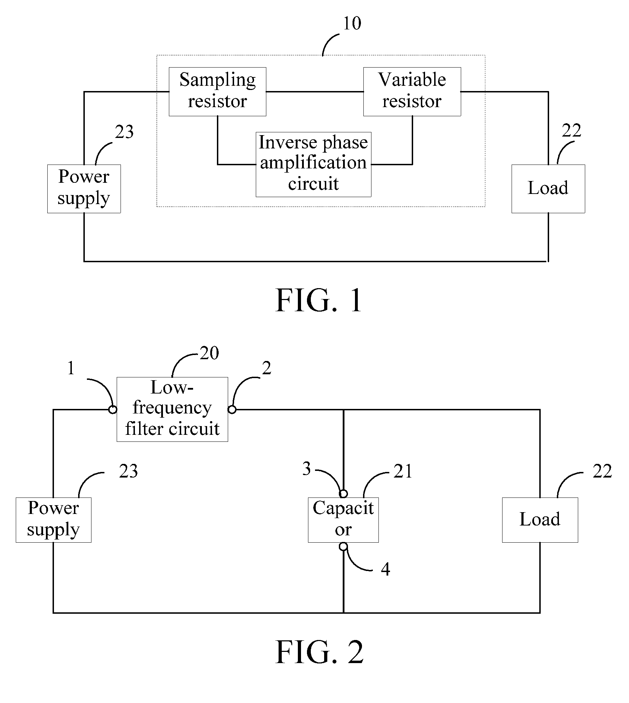

The method for reducing low-frequency interference in the prior art mainly uses an active filter circuit. As shown in FIG. 1, in an active filter circuit 10, a sampling resistor samples an input current and generates a voltage signal according to the sampled current. Therefore, the current is stabilized by controlling the conduction impedance of a variable resistor. When the variable resistor operating at a set DC operating point is used with a high power fan, the power consumption of the variable resistor is very high, which limits the application scope of the method.

### SUMMARY OF THE INVENTION

The present invention is directed to a communication device, which includes a circuit for reducing low-frequency interference. The circuit for reducing low-frequency interference stabilizes an input current of the communication device, so as to reduce the low-frequency interference of the communication device to other communication devices.

In an embodiment, the present invention provides a communication device. The communication device includes a circuit for reducing low-frequency interference. The circuit for reducing low-frequency interference includes a low-frequency filter circuit (20), and a capacitor (21).

The low-frequency filter circuit (20) includes a terminal (1) and a terminal (2), in which the terminal (1) is connected to a power supply (23), and the terminal (2) is connected to a load (22). The capacitor (21) includes a terminal (3) and a terminal (4), in which the terminal (3) is connected to the load (22), and the terminal (4) is connected to the power supply (23).

The low-frequency filter circuit includes a current detection circuit (30), a voltage two-quadrant Buck-Boost circuit (32), a summator (34), a pulse width modulation (PWM) control circuit (36), an over-under voltage clamping circuit (38), and a feedback circuit (40).

The current detection circuit (30) is connected to the Buck-Boost circuit (32) and the summator (34), and is connected to the power supply (23) through the terminal (1).

The Buck-Boost circuit (32) is connected to the over-under voltage clamping circuit (38) and the feedback circuit (40), and is connected to the load (22) through the terminal (2).

The summator (34) is connected to the PWM control circuit (36), and the PWM control circuit (36) is connected to the Buck-Boost circuit (32).

The feedback circuit (40) is connected to the summator (34).

In an embodiment, the present invention provides a communication device. The communication device includes a circuit for reducing low-frequency interference. The circuit for reducing low-frequency interference includes a low-frequency filter circuit (20) and a capacitor (21).

The low-frequency filter circuit (20) includes a terminal (1) and a terminal (2), in which the terminal (1) is connected to a power supply (23), and the terminal (2) is connected to a load (22). The capacitor (21) includes a terminal (3) and a terminal (4), in which the terminal (3) is connected to the load (22), and the terminal (4) is connected to the power supply (23).

The low-frequency filter circuit includes a current detection circuit (30), a Buck-Boost circuit (32), a digital power supply control chip (72) and a voltage sampling circuit (74).

The current detection circuit (30) is connected to the Buck-Boost circuit (32) and the digital power supply control chip (72), and is connect to the power supply (23) through the terminal (1).

The Buck-Boost circuit (32) is connected to the voltage sampling circuit (74), and is connected to the load (22) through the terminal (2).

The digital power supply control chip (72) is connected to the Buck-Boost circuit (32).

The voltage sampling circuit (74) is connected to the digital power supply control chip (72).

By using a circuit for reducing low-frequency interference in a communication device, a current provided by a power supply to the communication device that contains the circuit for reducing low-frequency interference may be stabilized, as a result, the low-frequency interference of the communication device to other communication devices is reduced.

### BRIEF DESCRIPTION OF THE DRAWINGS

FIG. 1 is a schematic structural view of a circuit for reducing low-frequency interference in the prior art;

FIG. 2 is a schematic structural view of a circuit for reducing low-frequency interference according to the present invention;

FIG. 3 is a schematic structural view of a first embodiment of a low-frequency filter circuit according to the present invention;

FIG. 4 is a schematic structural view of a voltage two-quadrant Buck-Boost power loop according to the present invention;

FIG. 5 is a schematic view of a first embodiment of a feedback circuit in the low-frequency filter circuit according to the present invention;

FIG. 6 is a schematic view of a second embodiment of a feedback circuit in the low-frequency filter circuit according to the present invention; and

FIG. 7 is a schematic structural view of a second embodiment of the low-frequency filter circuit according to the present invention.

### DETAILED DESCRIPTION OF THE EMBODIMENTS

The present invention is described clearly and completely with reference to the accompanying drawings in the following.

In an embodiment, the present invention provides a communication device. The communication device includes a circuit for reducing low-frequency interference. As shown in FIG. 2, the circuit for reducing low-frequency interference includes a low-frequency filter circuit 20 and a capacitor 21. The low-frequency filter 20 includes a terminal 1 and a terminal 2. The terminal 1 is configured to connect a power supply 23, and the terminal 2 is configured to connect a load 22. The load 22 may be a fan, a hard disk array, or a low-frequency clock circuit. In this embodiment, the load 22 is a fan. The capacitor 21 includes a terminal 3 and a terminal 4. The terminal 3 is configured to connect the fan 22, and the terminal 4 is configured to connect the power supply 23.

The two ends of the capacitor 21 may generate a changing voltage ΔU. During a positive half period, the capacitor 21 supplies the fan with energy of W = 1/2 * C1 * (ΔU)², where C1 is the capacitance of the capacitor 21. During a negative half period, the low-frequency filter circuit 20 charges the capacitor 21 with energy of W = 1/2 * C1 * (ΔU)² By adjusting C1, ΔU may be controlled within an acceptable range (such as 4 V), so that ΔU does not affect a normal operation of the fan.

The low-frequency filter circuit 20 may be a switch power supply with constant output power.

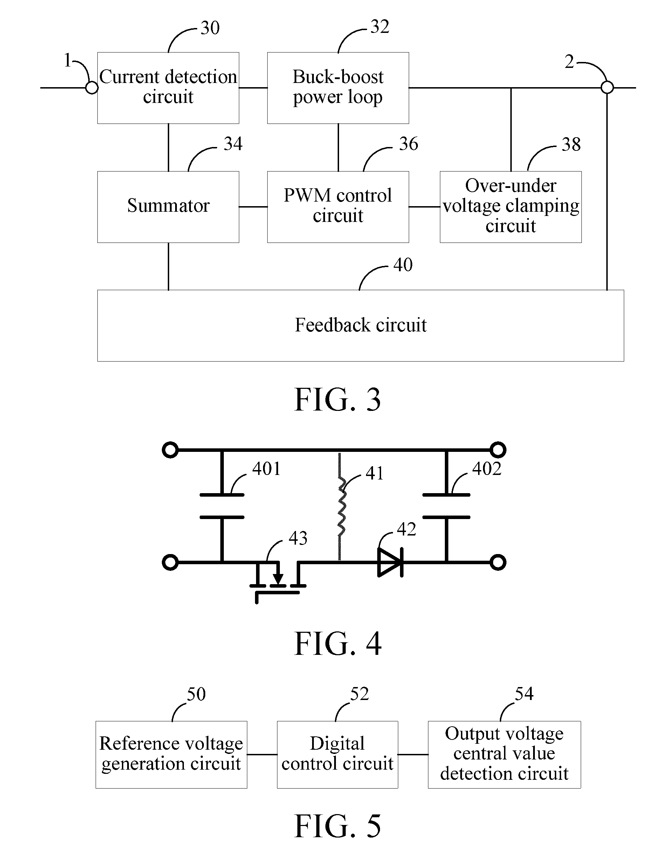

As shown in FIG. 3, the internal structure of the low-frequency filter circuit 20 includes: a current detection circuit 30, a voltage two-quadrant Buck-Boost circuit 32, a summator 34, a pulse width modulation (PWM) control circuit 36, an over-under voltage clamping circuit 38, and a feedback circuit 40.

The current detection circuit 30 is configured to detect an input current, and output a corresponding input voltage V1 according to the detected input current.

As shown in FIG. 4, the structure of the Buck-boost power loop 32 includes an inductor 41, a capacitor 401, a capacitor 402, a power switch tube 43, and a diode 42.

ΔI is a current in the inductor 41. When the reference voltage (VREF) calculated by the summator 34 is constant, ΔI is still changeable, which causes the input current of the current detection circuit 30 changeable. At this time, the current detection circuit 30 detects the input current, and stabilizes the input current by controlling the VREF through negative feedback.

Persons skilled in the art may know that the Buck-Boost circuit 32 may be replaced by a fly-back circuit, a forward circuit, a totem-pole circuit, a half-bridge circuit, or a full-bridge circuit.

The summator 34 is configured to multiply the voltage VI detected by the current detection circuit 30 and the feedback voltage V2 of the feedback circuit 40 respectively by corresponding parameters, and then add the results to obtain the VREF. That is, VREF = V1 * K1 + V2 * K2, where K1 and K2 are coefficients obtained statistically. Then, the VREF is output to the PWM control circuit 36.

The PWM control circuit 36 controls the power switch tube 43 in the Buck-Boost power loop 32 according to the VREF, and adjusts the output voltage by adjusting the duty cycle of the power switch tube 43. In this embodiment, the output voltage is the output voltage of the low-frequency filter circuit 20.

The over-under voltage clamping circuit 38 is configured to limit the output voltage range. Because the feedback circuit 40 responds slowly, when the rotation speed of the fan changes fast, the output voltage may vary within a relatively large range. The over-under voltage clamping circuit 38 responds very fast. When the load changes fast, the over-under voltage clamping circuit 38 may limit the output voltage range. In this embodiment, the over voltage clamping point is 55 V, and the under voltage clamping point is 41 V. The fan may operate normally when the voltage changes between 40 V and 56 V.

The feedback circuit 40 enables the output voltage to fluctuate within an acceptable range.

As shown in FIG. 5, the internal structure of the feedback circuit 40 includes: a reference voltage generation circuit 50, a digital control circuit 52, and an output voltage central value detection circuit 54. The output voltage central value detection circuit 54 is connected to the digital control circuit 52, and the digital control circuit 52 is connected to the reference voltage generation circuit 50.

In this embodiment, the reference voltage generation circuit 50 uses a frequency-voltage (F/V) converter. The output voltage central value detection circuit 54 is implemented by connecting an over-under voltage detection circuit to a resistor-capacitor (RC) low pass filter.

The F/V converter may be an RC low pass filter, and is configured to output a feedback voltage V2 according to the duty cycle of an input square wave of the digital control circuit 52.

The output voltage central value detection circuit 54 may obtain a central value after an output voltage passes through the RC low pass filter. The over-under voltage detection circuit in the output voltage central value detection circuit 54 detects the central value, and the detection result includes one of the three statuses: over voltage, under voltage, and normal.

In this embodiment, the detection criteria used by the output voltage central value detection circuit 54 may be an over voltage point of 50 V, an over voltage recovery point of 49 V, an under voltage point of 46 V, and an under voltage recovery point of 47 V. If the central value is higher than 50 V, it is regarded as over voltage; if the central value is lower than 46 V, it is regarded as under voltage.

The digital control circuit 52 may use a CPU or a programmable logic device to control the voltage V2 of the reference voltage generation circuit 50 according to the detection result of the output voltage central value detection circuit 54 by increasing the V2 in the case of under voltage or decreasing the V2 in the case of over voltage. Because a certain interval is needed between two adjacent adjustments and the interval is longer than the system response time, a margin is reserved. By controlling the V2, the central value of the output voltage may be stabilized at 48 V ± 1 V.

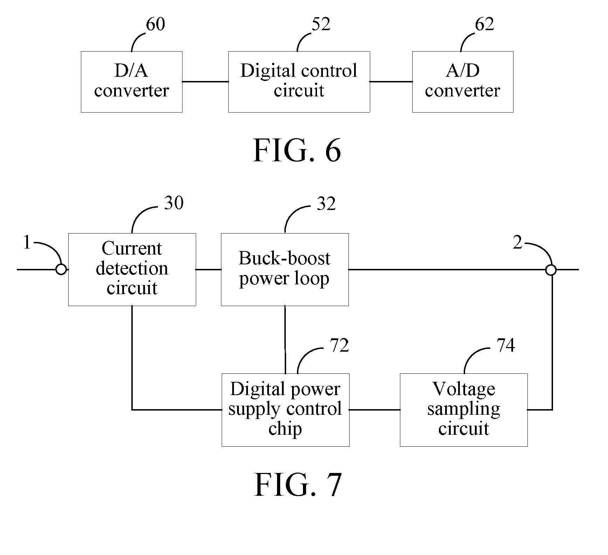

In another embodiment, the reference voltage generation circuit 50 uses a digital-to-analog (D/A) converter. The output voltage central value detection circuit 54 uses an analog-to-digital (A/D) converter. As shown in FIG. 6, after A/D sampling, an A/D converter 62 sends the sampled fluctuating output voltage to a digital control circuit 52, and the digital control circuit 52 calculates a central value.

The digital control circuit 52 calculates the central value, and decreases the V2 if the calculated central value is higher than 49 V, or increases the V2 if the output voltage central value is lower than 47 V.

A D/A converter 60 converts a digital signal generated by the digital control circuit 52 to the feedback voltage V2.

In another embodiment, as shown in FIG. 7, the internal structure of a low-frequency filter circuit 20 includes a current detection circuit 30, a Buck-Boost power loop 32, a digital power supply control chip 72 and a voltage sampling circuit 74. The current detection circuit 30 is connected to the power supply through a terminal (1), and the Buck-Boost power loop 31 is connected to the load (22) through a terminal (2).

Persons skilled in the art may know that the Buck-Boost circuit 32 may be replaced by a fly-back circuit, a forward circuit, a totem-pole circuit, a half-bridge circuit, or a full-bridge circuit.

The voltage sampling circuit 74 divides a voltage, and sends the divided output voltage to the digital power supply control chip 72 for calculation so as to obtain the central value of the output voltage.

The digital power supply control chip 72 calculates the central value of the output voltage, adjusts the duty cycle of a power switch tube according to the central value, and adjusts the duty cycle of the power switch tube in the Buck-Boost power loop 32 according to the deviation of the output voltage central value from 48 V. The digital power supply control chip 72 decreases the duty cycle of the power switch tube if the output voltage central value is higher than 49 V, or increases the duty cycle of the power switch tube if the output voltage central value is lower than 47 V.

In this embodiment, the communication device may be an access device, a transmission device, or a core network device.

The circuit for reducing low-frequency interference disclosed in this embodiment detects an output voltage and outputs a feedback voltage according to the detection result. The circuit for reducing low-frequency interference, according to the output voltage, decreases the feedback voltage in the case of over voltage, or increases the feedback voltage in the case of under voltage, thereby stabilizing the output voltage. By using the circuit for reducing low-frequency interference according to this embodiment in a communication device, the input current of the communication device may be maintained constant, which may effectively reduce low-frequency interference of the communication device to other communication devices.

The above descriptions are exemplary embodiments of the present invention, but not intended to limit the protection scope of the present invention. Any modification or equivalent replacement made by persons skilled in the art within the technical scope of the present invention should fall within the protection scope of the present invention. Therefore, the protection scope of the present invention is subject to the appended claims.

## Claims

1. A communication device, comprising a circuit for reducing low-frequency interference, wherein the circuit for reducing low-frequency interference comprises a low-frequency filter circuit (20) and a capacitor (21),
the low-frequency filter circuit (20) comprises a terminal (1) and a terminal (2), wherein the terminal (1) is connected to a power supply (23), and the terminal (2) is connected to a load (22); the capacitor (21) comprises a terminal (3) and a terminal (4), wherein the terminal (3) is connected to the load (22), and the terminal (4) is connected to the power supply (23),
the low-frequency filter circuit comprises a current detection circuit (30), a voltage two-quadrant Buck-Boost circuit (32), a summator (34), a pulse width modulation (PWM) control circuit (36), an over-under voltage clamping circuit (38), and a feedback circuit (40), wherein
the current detection circuit (30) is connected to the Buck-Boost circuit (32) and the summator (34), and is connect to the power supply (23) through the terminal (1);
the Buck-Boost circuit (32) is connected to the over-under voltage clamping circuit (38) and the feedback circuit (40), and is connected to the load (22) through the terminal (2);
the summator (34) is connected to the PWM control circuit (36), and the PWM control circuit (36) is connected to the Buck-Boost circuit (32); and
the feedback circuit (40) is connected to the summator (34).

2. The communication device according to claim 1, wherein the feedback circuit (40) comprises: a reference voltage generation circuit (50), a digital control circuit (52) and an output voltage central value detection circuit (54),
the reference voltage generation circuit (50) is connected to the summator (34), the digital control circuit (52) is connected to the reference voltage generation circuit (50), and the output voltage central value detection circuit (54) is connected to the digital control circuit (52).

3. The communication device according to claim 2, wherein the reference voltage generation circuit is a frequency-voltage converter, the output voltage central value detection circuit (54) is formed by connecting an over-under voltage detection circuit and a resistor-capacitor low pass filter.

4. The communication device according to claim 2, wherein the reference voltage generation circuit (50) is a digital-to-analog converter (60), and the output voltage central value detection circuit (54) is an analog-to-digital converter (62).

5. The communication device according to claim 1, wherein the communication device is an access device, a transmission device, or a core network device.

6. The communication device according to any one of claims 1 to 5, wherein the load (22) comprises at least one of a fan, a hard disk array, and a low-frequency clock circuit.

7. A communication device, comprising a circuit for reducing low-frequency interference, wherein the circuit for reducing low-frequency interference comprises a low-frequency filter circuit (20) and a capacitor (21),
the low-frequency filter circuit (20) comprises a terminal (1) and a terminal (2), wherein the terminal (1) is connected to a power supply (23), and the terminal (2) is connected to a load (22); the capacitor (21) comprises a terminal (3) and a terminal (4), wherein the terminal (3) is connected to the load (22), and the terminal (4) is connected to the power supply (23),
the low-frequency filter circuit comprises a current detection circuit (30), a Buck-Boost circuit (32), a digital power supply control chip (72) and a voltage sampling circuit (74), wherein
the current detection circuit (30) is connected to the Buck-Boost circuit (32) and the digital power supply control chip (72), and is connected to the power supply (23) through the terminal (1);
the Buck-Boost circuit (32) is connected to the voltage sampling circuit (74), and is connected to the load (22) through the terminal (2);
the digital power supply control chip (72) is connected to the Buck-Boost circuit (32); and
the voltage sampling circuit (74) is connected to the digital power supply control chip (72).

8. The communication device according to claim 7, wherein the communication device is an access device, a transmission device, or a core network device.

9. The communication device according to claim 7, wherein the load (22) comprises at least one of a fan, a hard disk array, and a low-frequency clock circuit.
